# EUROPEAN PATENT SPECIFICATION

(11) **EP 2 949 896 B1**
(45) Date of publication and mention of the grant of the patent: **20.09.2017**
(21) Application number: 13872951.2
(22) Date of filing: 20.12.2013
(51) Int. Cl.: F01N 3/36, B01D 53/94, F01N 3/08, F01N 3/24, F01N 3/20, F01N 3/28, B01D 53/90

(54) **EXHAUST GAS PURIFICATION DEVICE**
ABGASREINIGUNGSVORRICHTUNG
DISPOSITIF DE PURIFICATION DE GAZ D'ÉCHAPPEMENT

(30) Priority: 25.01.2013 JP 2013012220
(43) Date of publication of application: 02.12.2015
(73) Proprietor: Futaba Industrial Co., Ltd., Okazaki-shi, Aichi 444-8558 (JP)
(72) Inventor: NAGATA, Yoshinobu, Okazaki-shi Aichi 444-8558 (JP); MATSUMOTO, Naoki, Okazaki-shi Aichi 444-8558 (JP); UMENO, Yasufumi, Okazaki-shi Aichi 444-8558 (JP)
(74) Representative: Johnson, Yvonne Catherine
(86) International application number: PCT/JP2013/084320
(87) International publication number: WO 2014/115461

(56) References cited:
- EP-A1- 2 206 553
- EP-A1- 2 282 028
- DE-A1-102007 034 316
- JP-A- H02 223 624
- JP-A- 2005 214 100
- JP-A- 2006 329 019
- JP-A- 2007 263 003
- JP-A- 2010 071 255
- JP-A- 2010 116 864
- JP-A- 2012 017 692
- US-A1- 2010 077 742
- US-A1- 2010 263 359
- US-A1- 2011 094 206
- US-A1- 2011 094 206
- US-B2- 7 152 396

## Description

### CROSS-REFERENCE TO RELATED APPLICATIONS

This international application claims the benefit of Japanese Patent Application No. 2013-12220 filed January 25, 2013 in the Japan Patent Office, and the entire disclosure of Japanese Patent Application No. 2013-12220 is incorporated herein by reference.

### TECHNICAL FIELD

The present invention relates to an exhaust gas purification device that purifies exhaust gas in an exhaust gas flow path.

### BACKGROUND ART

Exhaust gas discharged from an internal combustion engine, such as a diesel engine, contains nitrogen oxides (NOₓ) as air pollutants. As a device for purifying such exhaust gas, an exhaust gas purification device is known that is configured such that a catalyst of SCR (Selective Catalytic Reduction) type is provided in an exhaust gas flow path and that urea water is injected into exhaust gas upstream of the catalyst. Urea water injected into the exhaust gas is hydrolyzed by heat of the exhaust gas. Ammonia (NH₃) generated by the hydrolysis is supplied to the catalyst with the exhaust gas. Nitrogen oxides in the exhaust gas react with ammonia in the catalyst and are thereby reduced and purified.

In this type of exhaust gas purification device, a catalyst with a large cross-sectional area is generally used in order to improve exhaust gas purifying effect of the catalyst. Upstream of the catalyst is formed an enlarged diameter flow path to expand a diameter of the exhaust gas flow path. However, in a configuration with such an enlarged diameter flow path, an exhaust gas flow tends to be biased in the enlarged diameter flow path. Distribution of the exhaust gas flowing into the catalyst is thus likely to be biased. Therefore, a configuration has been proposed in which a diffusion member for diffusing the exhaust gas into the enlarged diameter flow path is provided upstream of the enlarged diameter flow path (Patent Document 1).

### PRIOR ART DOCUMENTS

### PATENT DOCUMENTS

Patent Document 1: Japanese Unexamined Patent Application Publication No. 2010-90808

### SUMMARY OF THE INVENTION

### PROBLEMS TO BE SOLVED BY THE INVENTION

Inventors of the present invention have found a problem in which, if distribution of a reducing agent (urea water or ammonia after the hydrolysis) is biased in the exhaust gas flowing into the diffusion member, the biased distribution of the reducing agent in the exhaust gas flowing into the catalyst also is not eliminated. That is, the diffusion member has a function of reducing the biased exhaust gas flow in the enlarged diameter flow path, but does not have a function of dispersing the reducing agent unevenly present in the exhaust gas. In particular, when the direction in which the reducing agent is supplied and the direction in which the exhaust gas flows differ from each other at a merging position where the reducing agent merges with the exhaust gas, the flow of the reducing agent is influenced by the flow of the exhaust gas and thus is likely to be biased. Such biased distribution of the reducing agent flowing into the catalyst is a factor to decrease the exhaust gas purifying effect of the catalyst.

In one aspect of the present invention, it is desirable to reduce the biased distribution of the reducing agent flowing into the catalyst.

### MEANS FOR SOLVING THE PROBLEMS

An exhaust gas purification device in one aspect of the present invention comprises a first channel member that forms an exhaust gas flow path leading to a catalyst and a second channel member that forms a reducing agent flow path guiding a reducing agent injected by an injector to the exhaust gas flow path upstream of the catalyst. The first channel member comprises: a first part having a centre axis and extending in a first direction and having circular cross-section perpendicular to the first direction; a second part having a centre axis and extending in a second direction and having circular cross-section perpendicular to the second direction; and a third part joining the first part and the second part, the third part being extended so as to be enlarged in a third direction orthogonal both to the first direction and the second direction, such that the third part is laterally elongated in cross-section. The second channel member is inserted so as to penetrate a side wall of the third part of the first channel member to protrude into the exhaust gas flow path.

Such a configuration can reduce the biased distribution of the reducing agent in the exhaust gas flow path. According to a configuration with the second channel member not protruding into the exhaust gas flow path, the reducing agent guided into the exhaust gas flow path merges with exhaust gas flowing therein near a periphery thereof to flow along, and thus the distribution of the reducing agent in the exhaust gas flow path tends to be biased. In contrast, the configuration with the second channel member protruding into the exhaust gas flow path can guide the reducing agent to a central part of the exhaust gas flow path, thus reducing the biased distribution of the reducing agent in the exhaust gas flow path. Accordingly, the exhaust gas purification device in the one aspect of the present invention can reduce the biased distribution of the reducing agent flowing into the catalyst.

According to the above configuration, the second channel member may be a tubular member, may comprise a first end that opens on an injector side and a second end that is located on an opposite side from the first end and that opens in the exhaust gas flow path, and may form the reducing agent flow path, from the first end to the second end, that is blocked from the exhaust gas flow path. According to such a configuration, the reducing agent can be guided to the central part of the exhaust gas flow path while being hardly affected by the flow of the exhaust gas in the exhaust gas flow path.

According to the above configuration, the exhaust gas flow path may be provided, upstream of the catalyst, with a diffusion member that reduces bias of the exhaust gas flowing into the catalyst. The second channel member may form the reducing agent flow path that guides the reducing agent to the exhaust gas flow path upstream of the diffusion member. According to such a configuration, after the biased distribution of the reducing agent in the exhaust gas flowing into the diffusion member is reduced by the second channel member, the bias of the exhaust gas flowing into the catalyst is reduced. Thus, the biased distribution of the reducing agent flowing into the catalyst can be reduced effectively.

According to the above configuration, part of the second channel member inserted in the exhaust gas flow path may have a function of guiding exhaust gas that has hit an outer surface of the second channel member to flow around along the outer surface. Such a configuration disturbs the flow of the exhaust gas that has hit the outer surface of the second channel member, so that an effect of dispersing the reducing agent that has merged from the second channel member can be obtained.

According to the above configuration, part of the exhaust gas flow path in which the second channel member is inserted may be extended so as to be enlarged in a direction orthogonal both to a first direction that is a direction of flow of the exhaust gas hitting the outer surface of the second channel member and to a second direction that is an axial direction of the second channel member. Such a configuration facilitates the flow of the exhaust gas that has hit the outer surface of the second channel member flowing around along the outer surface, to thereby improve the effect of dispersing the reducing agent that has merged from the second channel member.

In addition to the exhaust gas purification device described above, the one aspect of the present invention can be implemented in various forms, such as a reducing agent supply mechanism used in an exhaust gas purification device, a method of reducing bias of exhaust gas flowing into a catalyst, etc.

### BRIEF DESCRIPTION OF THE DRAWINGS

FIG. 1A is a top view of an exhaust gas purification device of an embodiment, and FIG. 1B is a side view of the exhaust gas purification device of the embodiment.
FIG. 2A is a cross-sectional view taken along a line IIA-IIA of FIG. 1A, FIG. 2B is a cross-sectional view taken along a line IIB-IIB of FIG. 1B, and FIG. 2C is a view highlighting a partial area of FIG. 2B.
FIG. 3 is a perspective view of a diffusion member.
FIG. 4 is a view of the diffusion member seen from downstream in an exhaust gas flow path.
FIG. 5 is a view showing a shape of a blade of the diffusion member.
FIG. 6A is a cross-sectional view of an exhaust gas purification device of a comparative example, FIG. 6B is a diagram showing a simulation result of flow of a reducing agent in the exhaust gas purification device of the comparative example, and FIG. 6C is a diagram showing a simulation result of distribution of the reducing agent in a catalyst end surface of the exhaust gas purification device of the comparative example.
FIG. 7A is a diagram showing a simulation result of flow of the reducing agent in the exhaust gas purification device of the embodiment, FIG. 7B is a diagram showing a simulation result of flow of exhaust gas in the exhaust gas purification device of the embodiment, and FIG. 7C is a diagram showing a simulation result of distribution of the reducing agent in a catalyst end surface of the exhaust gas purification device of the embodiment.
FIG. 8A is a perspective view of a channel member of a first modified example, FIG. 8B is a top view of the channel member of the first modified example, FIG. 8C is a side view of the channel member of the first modified example, and FIG. 8D is a view of the channel member of the first modified example seen in an axial direction from downstream.
FIG. 9A is a perspective view of a channel member of a second modified example, FIG. 9B is a top view of the channel member of the second modified example, FIG. 9C is a side view of the channel member of the second modified example, and FIG. 9D is a cross-sectional view taken along a line IXD-IXD of FIG. 9C.
FIG. 10A is a top view of an exhaust gas purification device of a third modified example, and FIG. 10B is a cross-sectional view of the exhaust gas purification device of the third modified example.
FIG. 11A is a top view of an exhaust gas purification device of a fourth modified example, FIG. 11B is a cross-sectional view taken along a line XIB-XIB of FIG. 11A, and FIG. 11C is a cross-sectional view taken along a line XIC-XIC of FIG. 11B.

### EXPLANATION OF REFERENCE NUMERALS

1... exhaust gas purification device, 2... first channel member, 3... second channel member, 4... catalyst, 5...injector, 6... diffusion member

### MODE FOR CARRYING OUT THE INVENTION

Hereinafter, embodiments to which the present invention is applied will be described with reference to the drawings.

### [1. Configuration]

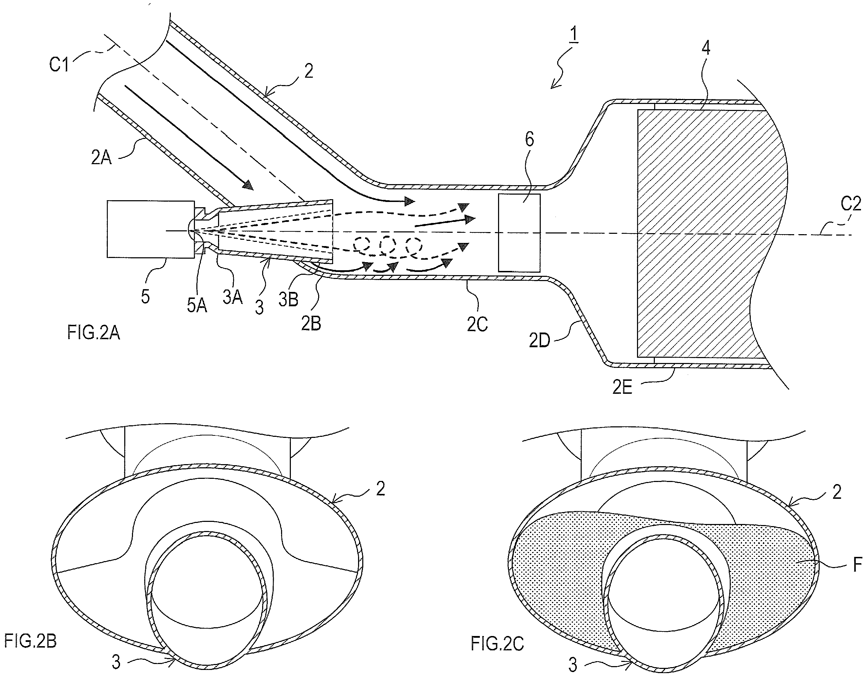

An exhaust gas purification device 1 purifies exhaust gas discharged from an internal combustion engine (for example, a diesel engine) of a motor vehicle. The exhaust gas purification device 1 comprises a first channel member 2, a second channel member 3, a catalyst 4, an injector 5, and a diffusion member 6. In the following description, up-down and left-right directions (vertical and horizontal directions) will be represented relative to FIG. 2A. However, such a representation is merely for convenience of description, and orientation of the exhaust gas purification device 1 is not particularly limited.

The first channel member 2 forms part of an exhaust gas flow path for guiding exhaust gas discharged from the internal combustion engine to outside of the motor vehicle, in particular the exhaust gas flow path leading to the catalyst 4. The first channel member 2 comprises, in order from an upstream side of the exhaust gas flow path (left side in FIG. 2A), a first tube 2A, a second tube 2B, a third tube 2C, a fourth tube 2D, and a fifth tube 2E. Classification of these first to fifth tubes 2A to 2E are merely for convenience of description, and classification of parts that compose the first channel member 2 is not particularly limited.

The first tube 2A is a straight circular tube.

The third tube 2C is a straight circular tube having the same inner diameter as the first tube 2A. However, the third tube 2C differs from the first tube 2A in direction of flow of the exhaust gas. Specifically, the first tube 2A forms a flow path in which the exhaust gas flows diagonally downward, and the third tube 2C forms a flow path in which the exhaust gas flows in a horizontal direction. Thus, the first tube 2A and the third tube 2C are connected with each other by the gently-sloping second tube 2B, which is curved in an arc shape in a side view.

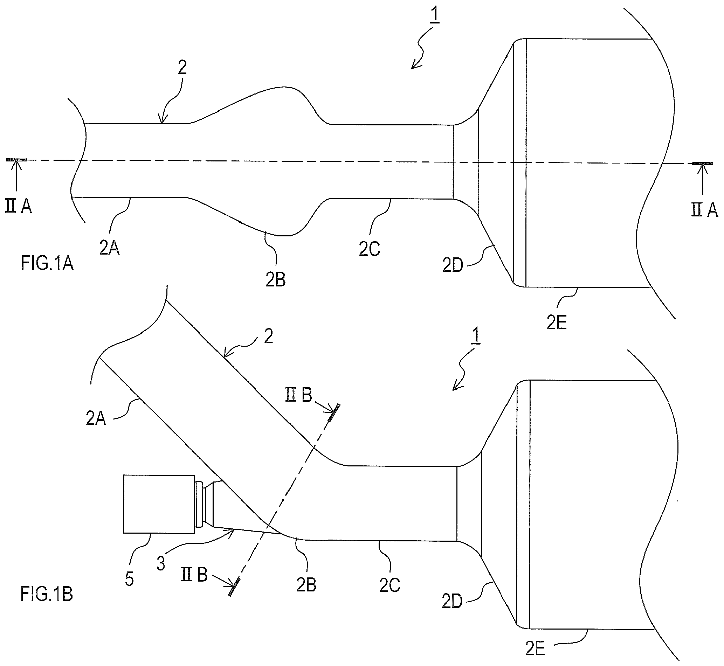

The second tube 2B is formed, for example, by joining two pieces of outer covering together one above the other. As shown in FIG. 1A, the exhaust gas flow path formed of the second tube 2B (i.e., part of the exhaust gas flow path in which the second channel member 3 is inserted) is extended so as to be enlarged (expand) on both sides in a widthwise direction (up-down direction in FIG. 1A) as compared with the first tube 2A and the third tube 2C in a top view. In other words, a cross-sectional shape of the second channel member 3 is circular, while a cross-sectional shape of the part of the first channel member 2 in which the second channel member 3 is inserted is a laterally elongated shape (elliptical shape in this example). The widthwise direction here refers to a direction orthogonal both to a first direction that is a direction of flow of exhaust gas hitting an outer surface (specifically an upper face) of the second channel member 3 (i.e., a diagonally downward direction) and to a second direction that is an axial direction of the second channel member 3 (i.e., a horizontal direction). Further, the first direction is a direction along a first axis C1 that is a center axis of the first tube 2A, and the second direction is a direction along a second axis C2 that is a center axis of the third tube 2C. In the present embodiment, the first axis C1 and the second axis C2 are positioned to cross each other.

The fifth tube 2E is a straight circular tube coaxial to the third tube 2C (having the second axis C2 as the center axis). However, the fifth tube 2E is larger than the third tube 2C in inner diameter in order to accommodate the cylindrical catalyst 4 having an outer diameter larger than the inner diameter of the third tube 2C. Thus, the third tube 2C and the fifth tube 2E are connected with each other by the gently-sloping fourth tube 2D, which is a circular tube having a shape of a truncated cone that forms an enlarged diameter flow path for gradually expanding the inner diameter of the exhaust gas flow path. In other words, the first channel member 2 forms, upstream of the catalyst 4, the exhaust gas flow path having the enlarged diameter flow path as the exhaust gas flow path leading to the catalyst 4.

The second channel member 3 is a tubular member having no penetrated portions in its side for communication between the inside and the outside thereof. Of both ends of the second channel member 3, a first end (upstream-side end) 3A opens on an injector 5 side, and a second end (downstream-side end) 3B located on an opposite side from the first end 3A opens in the exhaust gas flow path. That is, the second channel member 3 is a so-called dosing pipe that forms a reducing agent flow path guiding a reducing agent injected by the injector 5 (diffused from a small hole 5A arranged outside the exhaust gas flow path) to the exhaust gas flow path upstream of the catalyst 4 (more specifically, upstream of the diffusion member 6). Since the second channel member 3 has no penetrated portions in its side as described above, the reducing agent flow path blocked (partitioned) from the exhaust gas flow path is formed from the first end 3A to the second end 3B.

The second channel member 3 is a circular tube coaxial to the third tube 2C (having the second axis C2 as the center axis). In the present embodiment, the second channel member 3 is shaped as a truncated cone in which an inner diameter of the reducing agent flow path is gradually expanded toward the exhaust gas flow path, and is configured such that the injected reducing agent is less likely to directly hit (less likely to corrode) an inner surface of the second channel member 3. The second channel member 3 is connected to the second tube 2B of the first channel member 2, and the reducing agent injected by the injector 5 merges with the exhaust gas flowing in the second tube 2B. Specifically, the second channel member 3 is inserted so as to penetrate a penetrated portion (through hole) provided in a side wall of the second tube 2B to protrude into the exhaust gas flow path (to locate a leading end of the second channel member 3 in a central part of the exhaust gas flow path). The second channel member 3 is joined (welded), at an outer peripheral surface thereof, directly to the side wall of the second tube 2B.

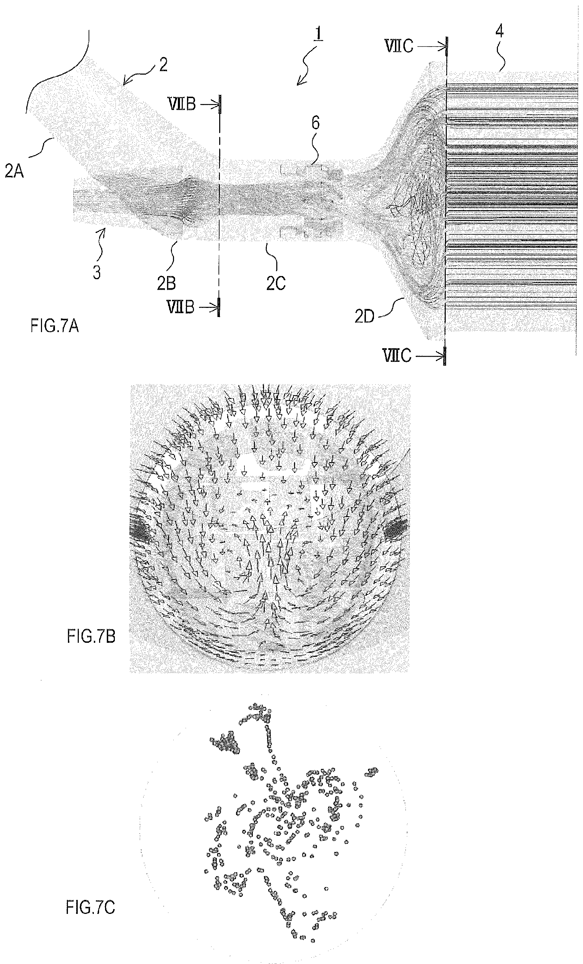

As described above, the part of the exhaust gas flow path in which the second channel member 3 is inserted is extended to so as be enlarged on both sides in a widthwise direction in a top view as shown in FIG. 1A. Thus, the exhaust gas flow path formed between the first channel member 2 and the second channel member 3 is shaped to be wider at its side parts on both sides in the widthwise direction than at its upper part as shown in FIG. 2B. The exhaust gas that has flowed from the first tube 2A thus tends to flow around in an area F (area on both sides of the second channel member 3 in the widthwise direction) shown in FIG. 2C, to thereby produce a flow lifting up the reducing agent from the second channel member 3, as shown in FIG. 7B to be explained later.

The catalyst 4 is a catalyst of SCR (Selective Catalytic Reduction) type having a function of reducing nitrogen oxides (NOₓ). The catalyst 4 is provided downstream of the enlarged diameter flow path in the exhaust gas flow path (specifically inside the fifth tube 2E).

The injector 5 functions as a supplier that injects the liquid reducing agent and supplies the reducing agent to upstream of the diffusion member 6 in the exhaust gas flow path (specifically into the second tube 2B) through the second channel member 3. In the present embodiment, urea water is injected as the reducing agent. Strictly speaking, urea water injected into the exhaust gas is hydrolyzed by heat of the exhaust gas to produce ammonia (NH₃), and the produced ammonia functions as the reducing agent. However, the state prior to the hydrolysis (i.e., urea water) is also referred to as the reducing agent.

The diffusion member 6 allows the exhaust gas that has flowed therein from upstream to be diffused to flow out to the enlarged diameter flow path so as to reduce bias of the exhaust gas flowing into the catalyst 4 (to bring the exhaust gas distribution close to a uniform state). The diffusion member 6 is provided upstream of the enlarged diameter flow path in the exhaust gas flow path (inside the third tube 2C).

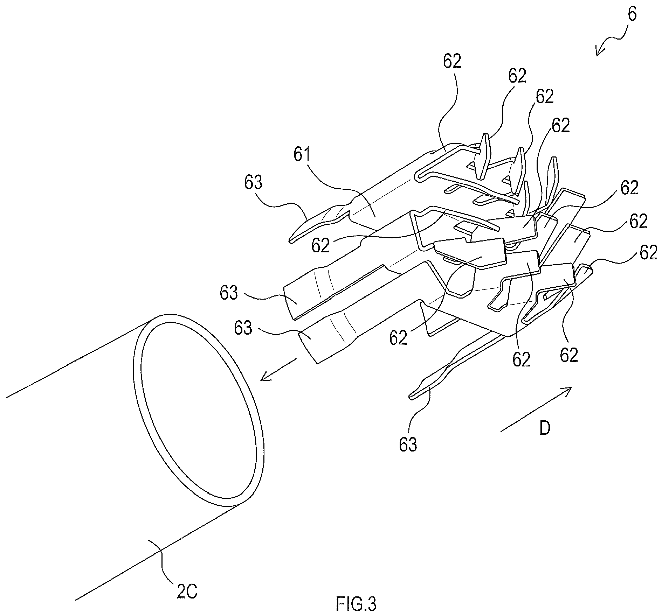

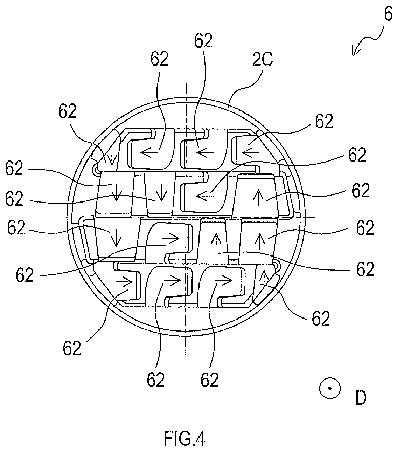

A specific structure of the diffusion member 6 will be described as an example. The diffusion member 6 shown in FIG. 3 and FIG. 4 is formed by bending a single metal plate. The diffusion member 6 comprises a main body 61, a plurality of blades 62, and a plurality of supports 63.

The supports 63 are protruding pieces extending upstream along a flow direction D of the exhaust gas. The supports 63 protrude radially outward as compared with the main body 61 by being bent in a stepped manner. Thus, in a state in which the diffusion member 6 is fitted in the third tube 2C, outer surfaces of the supports 63 are in contact with an inner surface of the third tube 2C, resulting in a gap between the main body 61 and the inner surface of the third tube 2C. When the supports 63 and the third tube 2C are welded to each other at the interfaces, the main body 61 is supported by the supports 63. That is, the diffusion member 6 is fixed to the third tube 2C.

The plurality of blades 62 are protruding pieces formed downstream along the flow direction D of the exhaust gas. Each of the blades 62 is inclined with respect to the flow direction D of the exhaust gas by being bent at its tip, and guides the exhaust gas in a direction corresponding to the inclination. The direction in which each of the blades 62 is inclined and the direction in which each of the blades 62 guides the exhaust gas are set as below.

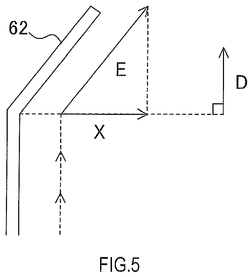

Assuming that a vector in the direction in which each of the blades 62 guides the exhaust gas is a vector E as shown in FIG. 5, the vector E can be a vector directed from a base to a tip of each of the blades 62. A component of the vector E in a plane orthogonal to the flow direction D of the exhaust gas is assumed as a vector X. When the diffusion member 6 is viewed from downstream in the flow direction D of the exhaust gas, the vector X of each of the blade 62 makes a circuit in a given route as a whole as shown in FIG. 4. Thus, the exhaust gas passing through the diffusion member 6 is guided in the direction of the vector X in each of the blades 62, resulting in a swirling flow produced in the exhaust gas that has flowed into the diffusion member 6, as a whole in a counterclockwise direction in FIG. 4. As a result, the exhaust gas is likely to spread into the enlarged diameter flow path, to thereby reduce the bias of the exhaust gas flowing in the catalyst 4.

### [2. Operation]

The operation of the exhaust gas purification device 1 will be described next. The exhaust gas discharged from the internal combustion engine is guided by the exhaust gas flow path to the diffusion member 6, passes through the diffusion member 6, and then is guided into the catalyst 4. The reducing agent injected from the injector 5 is guided by the reducing agent flow path to the central part of the exhaust gas flow path and then merges with the exhaust gas.

The part of the second channel member 3 inserted in the exhaust gas flow path has a function of guiding the exhaust gas that has hit the upper face of the outer surface of the second channel member 3, from among the exhaust gas flowing from the first tube 2A to the second tube 2B, to flow around along the outer surface. Thus, a swirling flow is generated in the vicinity of the leading end of the second channel member 3, so that the reducing agent that has flowed out from the second channel member 3 is lifted up and dispersed in the exhaust gas flow path.

### [3. Effects]

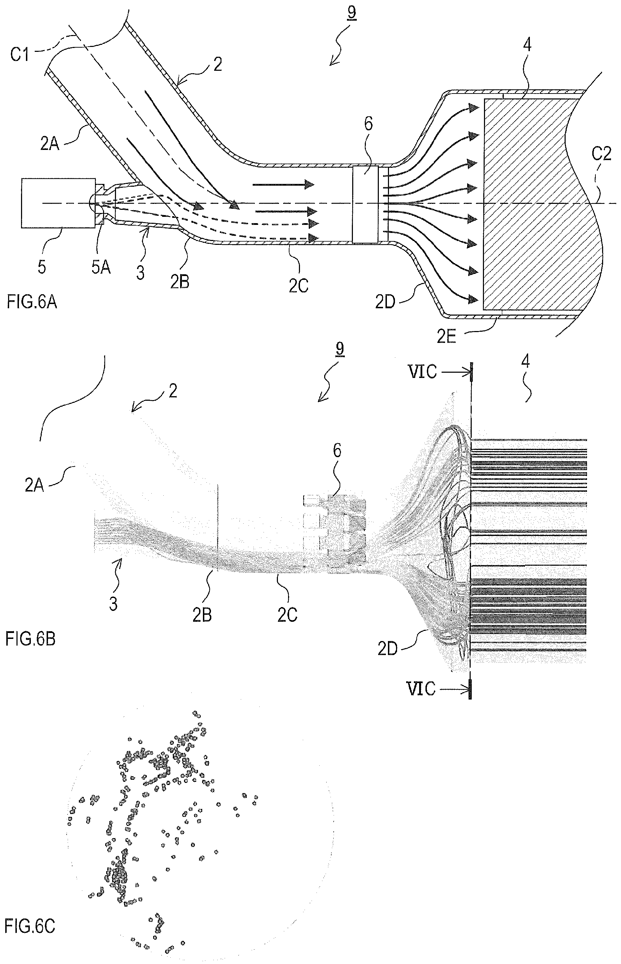

According to the present embodiment described above, the following effects can be obtained.
[A1] In the exhaust gas purification device 1, the second channel member 3 is inserted so as to penetrate the side wall of the first channel member 2 to protrude into the exhaust gas flow path. That is, the second channel member 3 is extended to the inside of the first channel member 2. Thus, the exhaust gas purification device 1 can reduce biased distribution of the reducing agent in the exhaust gas flow path as compared to a configuration with the second channel member 3 not protruding into the exhaust gas flow path.
   Here, a reason why such an effect is obtained will be explained by comparison with the configuration with the second channel member 3 not protruding into the exhaust gas flow path (an exhaust gas purification device of a comparative example). As shown in FIG. 6A, according to an exhaust gas purification device 9 of the comparative example having the second channel member 3 not protruding into the exhaust gas flow path, the reducing agent guided into the exhaust gas flow path merges with exhaust gas flowing therein near a periphery thereof to flow along, and thus tends to gather at a lower part of the exhaust gas flow path. This causes the distribution of the reducing agent flowing into the diffusion member 6 to be biased largely downward in this example. The diffusion member 6 has a function of reducing the bias of the exhaust gas in the enlarged diameter flow path, but its effect of spreading the reducing agent that has unevenly flowed therein to the entire exhaust gas flow path is small. Thus, the exhaust gas that has passed through the diffusion member 6 easily flows into the catalyst 4 in a state where the distribution of the reducing agent is biased. In such a state, it is not possible to obtain sufficient exhaust gas purifying effect of the catalyst 4. In contrast, according to the exhaust gas purification device 1 of the present embodiment, the second channel member 3 can guide the reducing agent to the central part of the exhaust gas flow path as shown in FIG. 2A, thereby reducing the biased distribution of the reducing agent in the exhaust gas flow path. Thus, the exhaust gas purification device 1 can reduce the biased distribution of the reducing agent flowing into the catalyst 4.
[A2] The second channel member 3 forms the reducing agent flow path, from the first end 3A to the second end 3B, that is blocked from the exhaust gas flow path. According to the exhaust gas purification device 1, the reducing agent can thus be guided to the central part of the exhaust gas flow path while being hardly affected by the flow of the exhaust gas in the exhaust gas flow path.
[A3] The second channel member 3 forms the reducing agent flow path guiding the reducing agent into the exhaust gas flow path upstream of the diffusion member 6. Accordingly, after the biased distribution of the reducing agent in the exhaust gas flowing into the diffusion member 6 is reduced by the second channel member 3, the bias of the exhaust gas flowing into the catalyst 4 is reduced. Thus, the exhaust gas purification device 1 can effectively reduce the biased distribution of the reducing agent flowing into the catalyst 4.
[A4] The part of the second channel member 3 inserted in the exhaust gas flow path has the function of guiding the exhaust gas that has hit the outer surface of the second channel member 3 to flow around along the outer surface. Accordingly, in the exhaust gas purification device 1, the flow of the exhaust gas that has hit the outer surface of the second channel member 3 is disturbed, and thus the effect of dispersing the reducing agent that has merged from the second channel member 3 is obtained.
[A5] The part of the exhaust gas flow path in which the second channel member 3 is inserted is extended so as to be enlarged in the direction orthogonal both to the first direction that is the direction of the flow of the exhaust gas hitting the outer surface of the second channel member 3 and to the second direction that is the axial direction of the second channel member 3. Since the exhaust gas purification device 1 facilitates the flow of the exhaust gas that has hit the outer surface of the second channel member 3 flowing around along the outer surface, it is possible to improve the effect of dispersing the reducing agent that has merged from the second channel member 3.

### [4. Simulation Results]

Now, simulation results will be described. According to the exhaust gas purification device 9 of the comparative example, as shown in FIG. 6B, the reducing agent (streamlines in the figure) guided into the exhaust gas flow path merges with the exhaust gas flowing therein near a periphery thereof to flow along, and thus the reducing agent is less likely to reach the central part of the exhaust gas flow path and gathers at a lower part thereof. This causes the distribution of the reducing agent (ammonia) (dots in the figure) in an end surface of the catalyst 4 to be biased as shown in FIG. 6C. FIG. 6C corresponds to a VIC-VIC cross-sectional view of FIG. 6B.

In contrast, according to the exhaust gas purification device 1 of the present embodiment, as shown in FIG. 7A, the second channel member 3 guides the reducing agent to the central part of the exhaust gas flow path, and thus a phenomenon in which the reducing agent gathers at the lower part of the exhaust gas flow path is less likely to occur. Moreover, the exhaust gas that has hit the upper face of the second channel member 3 is guided to branch to left and right so as to flow around along the outer surface thereof. Thus, a swirling flow with a high flow velocity is generated as shown in FIG. 7B and the reducing agent that has flowed out from the second channel member 3 is lifted up and dispersed in the exhaust gas flow path. This allows the distribution of the reducing agent (ammonia) (dots in the figure) in the end surface of the catalyst 4 to be less biased than that of the comparative example as shown in FIG. 7C. FIG. 7B corresponds to a VIIB-VIIB cross-sectional view of FIG. 7A, and FIG. 7C corresponds to a VIIC-VIIC cross-sectional view of FIG. 7A.

### [5. Other Embodiments]

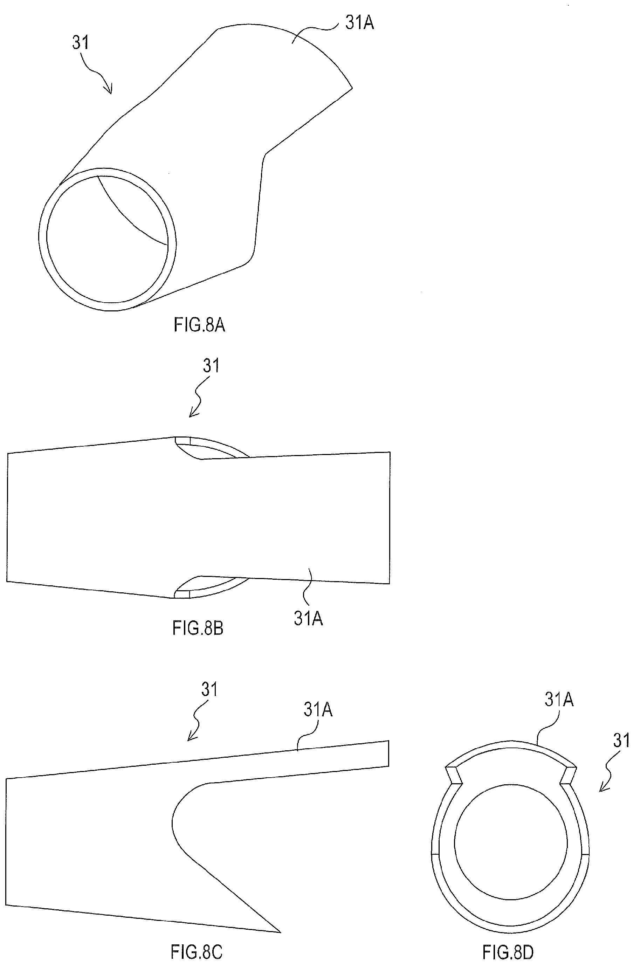

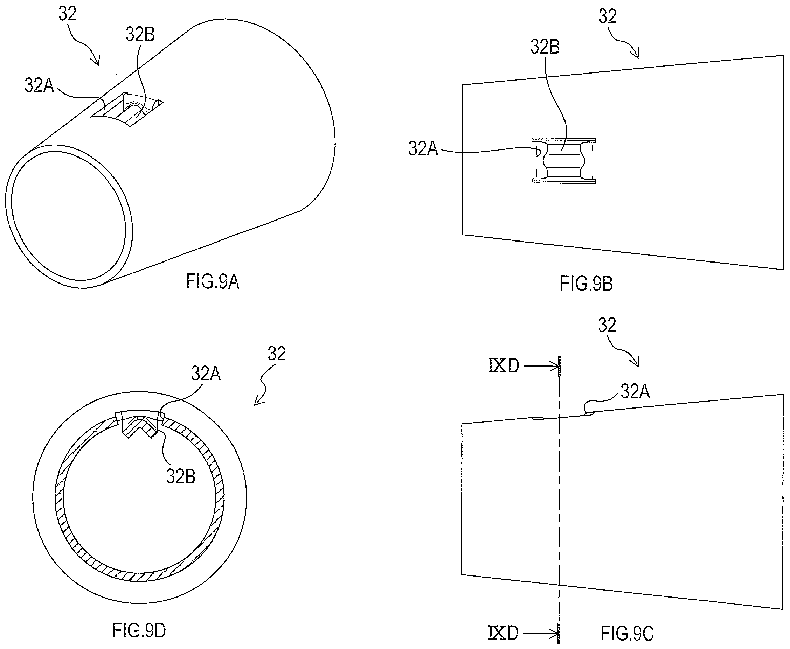

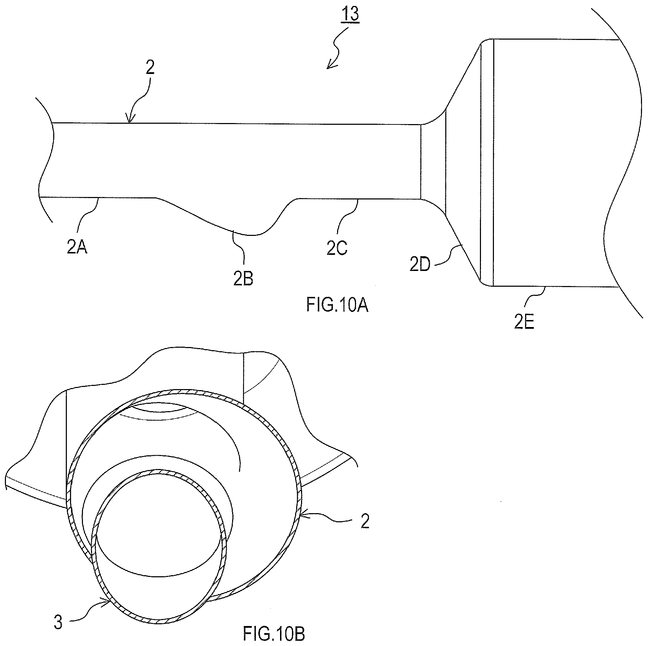

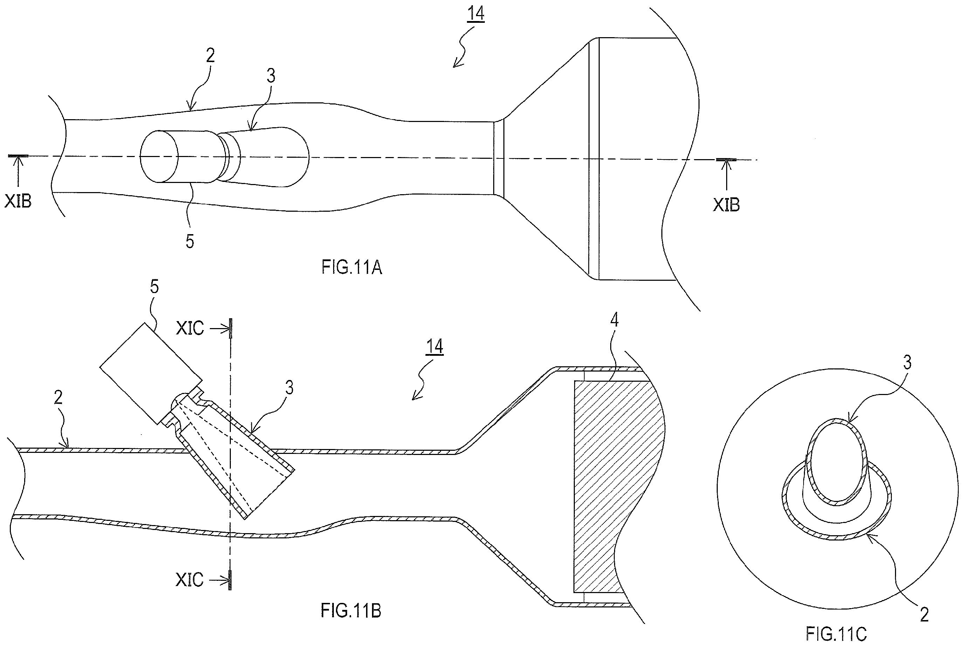

The embodiment of the present invention has been described above. However, it goes without saying that the present invention is not limited to the above embodiment and may be embodied in various forms.
[B1] The second channel member 3 is not limited to the shape exemplified in the above embodiment. FIG. 8A is a perspective view of a channel member 31 of a first modified example that can be used in place of the second channel member 3 described above, FIG. 8B is a top view (plan view) thereof, FIG. 8C is a side view thereof, and FIG. 8D is a view seen in an axial direction from downstream. The channel member 31 of the first modified example differs from the second channel member 3 of the above embodiment in that the channel member 31 is shaped to have part other than an upper face 31A of a leading end thereof removed (cut out). Even with such a shape, the protruding upper face 31A guides the reducing agent to the central part of the exhaust gas flow path, and the swirling flow produced by the exhaust gas that has hit the upper face 31A lifts up and disperses the reducing agent in the exhaust gas flow path. Thus, the channel member 31 provides effects similar to those of the above embodiment.
[B2] FIG. 9A is a perspective view of a channel member 32 of a second modified example that can be used in place of the second channel member 3 described above, FIG. 9B is a top view (plan view) thereof, FIG. 9C is a side view thereof, and FIG. 9D is an IXD-IXD cross-sectional view of FIG. 9C. The channel member 32 of the second modified example differs from the second channel member 3 of the above embodiment in that the channel member 32 has a penetrated portion 32A and a blade 32B provided on an upper face thereof. The penetrated portion 32A and the blade 32B are formed by processing the upper face. The blade 32B has a shape bent inward along a bend line in an axial direction of the reducing agent flow path and has a function of guiding the exhaust gas that has flowed in from the penetrated portion 32A to flow along an inner surface of the reducing agent flow path. Part of the exhaust gas is taken into the reducing agent flow path through the penetrated portion 32A, and thus an effect of reducing the phenomenon in which the exhaust gas is blown back at an outlet of the reducing agent flow path is obtained, in addition to effects similar to those of the above embodiment. Moreover, since the exhaust gas that has flowed in from the penetrated portion 32A is guided to flow along the inner surface of the reducing agent flow path, it is possible to reduce the influence of the exhaust gas on the flow of the reducing agent. The locations, shapes, numbers, etc. of the penetrated portion 32A and the blade 32B are not particularly limited.
[B3] In the above embodiment, the configuration in which the part of the exhaust gas flow path in which the second channel member 3 is inserted is extended so as to be enlarged on both sides in a widthwise direction in a top view has been illustrated, but the disclosed embodiment is not limited thereto. FIG. 10A is a top view (plan view) of an exhaust gas purification device 13 of a third modified example, and FIG. 10B is a cross-sectional view thereof (cross-sectional view thereof showing a position corresponding to FIG. 2B). The exhaust gas purification device 13 of the third modified example has a basic configuration similar to that of the above embodiment, but differs therefrom in that the part of the exhaust gas flow path in which the second channel member 3 is inserted is extended so as to be enlarged on one side in a widthwise direction in a top view. Thus, as shown in FIG. 10B, the exhaust gas flow path formed between the first channel member 2 and the second channel member 3 is shaped to be wider at its side part on one side in the widthwise direction (the right side in this example) than at its upper part. The exhaust gas that has hit the upper face of the second channel member 3 is thus guided to flow around to the right along the outer surface thereof. As a result, a swirling flow is generated to lift up and disperse the reducing agent that has flowed out from the second channel member 3, so that effects similar to those of the above embodiment are obtained.
[B4] The above embodiment assumes that the exhaust gas flow path comprises a curved flow path, but the disclosed embodiment is not limited thereto and may be applied to a linear-shaped exhaust gas flow path. FIG. 11A is a top view (plan view) of an exhaust gas purification device 14 of a fourth modified example, FIG. 11B is an XIB-XIB cross-sectional view of FIG. 11A, and FIG. 11C is an XIC-XIC cross-sectional view of FIG. 11B. According to the configuration with the second channel member 3 not protruding into the exhaust gas flow path, even if a linear-shaped exhaust gas flow path is employed, the reducing agent guided into the exhaust gas flow path merges with the exhaust gas flowing therein near a periphery thereof to flow along, and thus the reducing agent is biased in the exhaust gas flow path. However, according to the exhaust gas purification device 14 of the fourth modified example, the reducing agent is guided by the second channel member 3 to the central part of the exhaust gas flow path, and also dispersed by the swirling flow produced by the exhaust gas that has hit the outer surface of the second channel member 3. Thus, effects similar to those of the above embodiment are obtained.
[B5] The exhaust gas flow path and the reducing agent of the above embodiment are merely examples, and the disclosed embodiment is not limited thereto. For example, in the above embodiment, part of the first channel member 2 has a laterally elongated shape to form, between the first channel member 2 and the second channel member 3, an exhaust gas flow path that is wider at its side parts than at its upper part (the hitting side). However, at least part of the second channel member 3 may have a vertically elongated shape. The first channel member 2 and the second channel member 3 thus having cross-sectional shapes dissimilar to each other, with the cross-sectional shape of the first channel member 2 being wider in the widthwise direction than that of the second channel member 3, allow the exhaust gas to easily flow around both sides of the second channel member 3 in the widthwise direction. For further example, the first tube 2A and the third tube 2C may have inner diameters different from each other, and the third tube 2C, the fifth tube 2E, and the second channel member 3 are not necessarily coaxial with one another. For further example, the exhaust gas flow path and the reducing agent flow path may not have circular cross sections. For further example, the enlarged diameter flow path and the reducing agent flow path may have shapes other than a truncated cone shape. For further example, the exhaust gas flow path is not limited to the configuration with an enlarged diameter flow path, and may have no enlarged diameter flow path.
[B6] In the above embodiment, the configuration in which the diffusion member 6 is provided upstream of the enlarged diameter flow path in the exhaust gas flow path has been illustrated. However, the disclosed embodiment is not limited to this configuration, and may be configured without the diffusion member 6.
[B7] The reducing agent is not limited to urea water as long as it contributes to purification of the exhaust gas in the catalyst.
[B8] Each component of the present invention is merely conceptual, and is not limited to that of the above embodiment. For example, the function of one component may be distributed to a plurality of components or the functions of multiple components may be integrated in one component. Also, at least a portion of the configuration of the above embodiment may be replaced by a well-known configuration having a similar function.

## Claims

1. An exhaust gas purification device (1) comprising:
a first channel member (2) that forms an exhaust gas flow path leading to a catalyst (4); and
a second channel member (3) that forms a reducing agent flow path guiding a reducing agent injected by an injector (5) to the exhaust gas flow path upstream of the catalyst (4),
wherein the first channel member (2) comprises:
a first tube (2A) having a centre axis (C1) extending in a first direction and having circular cross-section perpendicular to the first direction;
a third tube (2C) having a centre axis (C2) extending in a third direction and having circular cross-section perpendicular to the third direction; and
a second tube (2B) joining the first tube (2A) and the third tube (2C), the second tube (2B) being extended so as to be enlarged in a second direction orthogonal both to the first direction and the third direction, such that the second tube (2B) is laterally elongated in cross-section; and
wherein the second channel member (3) is inserted so as to penetrate a side wall of the second tube (2B) of the first channel member (2) to protrude into the exhaust gas flow path.

2. The exhaust gas purification device (1) according to claim 1,
wherein the second channel member (3) is a tubular member,
wherein the second channel member (3) comprises a first end (3A) that opens on an injector side and a second end (3B) that is located on an opposite side from the first end (3A) and that opens in the exhaust gas flow path, and
wherein the second channel member (3) forms the reducing agent flow path from the first end (3A) to the second end (3B), the reducing agent flow path being blocked from the exhaust gas flow path.

3. The exhaust gas purification device according to claim 1 or 2,
wherein the exhaust gas flow path is provided, upstream of the catalyst (4), with a diffusion member (6) that reduces bias of exhaust gas flowing into the catalyst (4), and
wherein the second channel member (3) forms the reducing agent flow path guiding the reducing agent to the exhaust gas flow path upstream of the diffusion member (6).

4. The exhaust gas purification device (1) according to any one of claims 1 to 3,
wherein part of the second channel member (3) inserted in the exhaust gas flow path has a function of guiding exhaust gas that has hit an outer surface of the second channel member (3) to flow around along the outer surface.

5. The exhaust gas purification device (1) according to any one of claims 1 to 4,
wherein a cross-sectional shape of the first channel member (2) and a cross-sectional shape of the second channel member (3) are dissimilar to each other, and
wherein the cross-sectional shape of the first channel member (2) is wider in the third direction than the cross-sectional shape of the second channel member (3).

6. The exhaust gas purification device (1) according to any one of claims 1 to 5, wherein a leading end of the second channel member (3) is located in a central part of the exhaust gas flow path.

## Patentansprüche

1. Abgasreinigungseinrichtung (1) umfassend:
einen ersten Kanalteil (2), der einen Abgasflusspfad bildet, der zu einem Katalysator (4) führt; und
einen zweiten Kanalteil (3), der einen Reduktionsmittelflusspfad bildet, der ein Reduktionsmittel führt, das mittels einer Einspritzdüse (5) in den Abgasflusspfad stromaufwärts des Katalysators (4) eingespritzt wird,
wobei der erste Kanalteil (2) umfasst:
ein erstes Rohr (2A), das eine Zentralachse (C1) hat, die sich in einer ersten Richtung erstreckt, und das einen kreisförmigen Querschnitt senkrecht zu der ersten Richtung hat;
ein drittes Rohr (2C), das eine Zentralachse (C2) hat, die sich in einer dritten Richtung erstreckt, und das einen kreisförmigen Querschnitt senkrecht zu der dritten Richtung hat; und
ein zweites Rohr (2B), das mit dem ersten Rohr (2A) und dem dritten Rohr (2C) verbunden ist, wobei das zweite Rohr (2B) sich derartig erstreckt, dass es in einer zweiten Richtung orthogonal sowohl zu der ersten Richtung als auch zu der dritten Richtung erweitert ist, sodass das zweite Rohr (2B) lateral im Querschnitt verlängert ist; und wobei der zweite Kanalteil (3) eingeführt wird, sodass er eine Seitenwand des zweiten Rohres (2B) des ersten Kanalteils (2) penetriert, um in den Abgasflusspfad hervorzuragen.

2. Abgasreinigungseinrichtung (1) nach Anspruch 1,
wobei der zweite Kanalteil (3) ein rohrförmiger Teil ist,
wobei der zweite Kanalteil (3) ein erstes Ende (3A) umfasst, das an einer Einspritzseite öffnet und ein zweites Ende (3B), das an einer gegenüberliegenden Seite des ersten Endes (3A) angeordnet ist und das in den Abgasflusspfad öffnet, und
wobei der zweite Kanalteil (3) den Reduktionsmittelflusspfad von dem ersten Ende (3A) zu dem zweiten Ende (3B) bildet, wobei der Reduktionsmittelflusspfad von dem Abgasflusspfad geblockt wird.

3. Abgasreinigungseinrichtung nach Anspruch 1 oder 2,
wobei der Abgasflusspfad bereitgestellt wird, stromaufwärts des Katalysators (4), mit einem Diffusionsteil (6), der den Bias von Abgas, das in den Katalysator (4) fließt, reduziert, und
wobei der zweite Kanalteil (3) den Reduktionsmittelflusspfad bildet, der das Reduktionsmittel zu dem Abgasflusspfad stromaufwärts des Diffusionsteils (6) führt.

4. Abgasreinigungseinrichtung (1) nach einem der Ansprüche 1 bis 3,
wobei ein Teil des zweiten Kanalteils (3), der in den Abgasflusspfad eingeführt ist, eine Funktion des Führens von Abgas, das eine Außenfläche des zweiten Kanalteils (3) getroffen hat, um entlang der Außenfläche zu fließen, hat.

5. Abgasreinigungseinrichtung (1) nach einem der Ansprüche 1 bis 4,
wobei eine Querschnittsform des ersten Kanalteils (2) und eine Querschnittsform des zweiten Kanalteils (3) verschieden voneinander sind, und
wobei die Querschnittsform des ersten Kanalteils (2) breiter in der dritten Richtung als die Querschnittsform des zweiten Kanalteils (3) ist.

6. Abgasreinigungseinrichtung (1) nach einem der Ansprüche 1 bis 5, wobei ein führendes Ende des zweiten Kanalteils (3) in einem zentralen Teil des Abgasflusspfades angeordnet ist.

## Revendications

1. Dispositif de purification de gaz d'échappement (1) comprenant :
un premier élément de canal (2) qui forme une voie de flux de gaz d'échappement menant à un catalyseur (4) ; et
un second élément de canal (3) qui forme une voie de flux d'agent de réduction guidant un agent de réduction injecté par un injecteur (5) vers la voie de flux de gaz d'échappement en amont du catalyseur (4),
dans lequel le premier élément de canal (2) comprend :
un premier tube (2A) présentant un axe central (C1) s'étendant dans une première direction et présentant une section transversale circulaire perpendiculaire à la première direction ;
un troisième tube (2C) présentant un axe central (C2) s'étendant dans une troisième direction et présentant une section transversale circulaire perpendiculaire à la troisième direction ; et
un deuxième tube (2B) joignant le premier tube (2A) et le troisième tube (2C), le deuxième tube (2B) étant étendu de sorte à être agrandi dans une deuxième direction orthogonale à la fois à la première direction et à la troisième direction de sorte que le deuxième tube (2B) soit latéralement allongé en section transversale ; et
dans lequel le second élément de canal (3) est inséré de sorte à pénétrer une paroi latérale du deuxième tube (2B) du premier élément de canal (2) pour faire saillie dans la voie de flux de gaz d'échappement.

2. Dispositif de purification de gaz d'échappement (1) selon la revendication 1,
dans lequel le second élément de canal (3) est un élément tubulaire,
dans lequel le second élément de canal (3) comprend une première extrémité (3A) qui s'ouvre sur un côté injecteur et une seconde extrémité (3B) qui est située sur un côté opposé de la première extrémité (3A) et qui s'ouvre dans la voie de flux de gaz d'échappement, et
dans lequel le second élément de canal (3) forme la voie de flux d'agent de réduction de la première extrémité (3A) à la seconde extrémité (3B), la voie de flux d'agent de réduction étant bloquée depuis la voie de flux de gaz d'échappement.

3. Dispositif de purification de gaz d'échappement selon la revendication 1 ou 2,
dans lequel la voie de flux de gaz d'échappement est dotée, en amont du catalyseur (4), d'un élément de diffusion (6) qui réduit le déplacement de gaz d'échappement circulant dans le catalyseur (4), et
dans lequel le second élément de canal (3) forme la voie de flux d'agent de réduction guidant l'agent de réduction vers la voie de flux de gaz d'échappement en amont de l'élément de diffusion (6).

4. Dispositif de purification de gaz d'échappement (1) selon l'une quelconque des revendications 1 à 3,
dans lequel la partie du second élément de canal (3) insérée dans la voie de flux de gaz d'échappement a une fonction de guidage de gaz d'échappement qui a frappé une surface extérieure du second élément de canal (3), pour circuler autour, le long de la surface extérieure.

5. Dispositif de purification de gaz d'échappement (1) selon l'une quelconque des revendications 1 à 4,
dans lequel une forme de section transversale du premier élément de canal (2) et une forme de section transversale du second élément de canal (3) sont différentes l'une de l'autre, et
dans lequel la forme de section transversale du premier élément de canal (2) est plus large dans la troisième direction que la forme de section transversale du second élément de canal (3).

6. Dispositif de purification de gaz d'échappement (1) selon l'une quelconque des revendications 1 à 5,
dans lequel une extrémité avant du deuxième élément de canal (3) est située dans une partie centrale de la voie de flux de gaz d'échappement.
